# EUROPÄISCHE PATENTSCHRIFT

(11) **EP 1 979 246 B1**
(45) Veröffentlichungstag und Bekanntmachung des Hinweises auf die Patenterteilung: **23.01.2013**
(21) Anmeldenummer: 07704193.7
(22) Anmeldetag: 29.01.2007
(51) Int. Cl.: B65D 81/26, B65D 75/00

(54) **HAUBE, INSBESONDERE FÜR BEHÄLTER FÜR KORROSIONSEMPFINDLICHE LADUNG**
SHROUD, IN PARTICULAR FOR CORROSION-SENSITIVE FREIGHT
CAPOT, EN PARTICULIER POUR DES RÉCIPIENTS POUR UNE CHARGE SENSIBLE À LA CORROSION

(30) Priorität: 31.01.2006 DE 102006005666; 20.03.2006 DE 102006014551
(43) Veröffentlichungstag der Anmeldung: 15.10.2008
(73) Patentinhaber: Corpac Deutschland GmbH & Co. KG, 71720 Oberstenfeld (DE)
(72) Erfinder: STOTTMEISTER, Gerhard, 71563 Affalterbach (DE)
(74) Vertreter: Pioch, Holger
(86) Internationale Anmeldenummer: PCT/EP2007/050838
(87) Internationale Veröffentlichungsnummer: WO 2007/088155

(56) Entgegenhaltungen:
- EP-A- 0 639 657
- EP-A- 0 994 041
- EP-A- 1 284 320
- WO-A-00/46122
- FR-A- 2 772 529
- US-A- 5 813 564
- US-A- 5 908 135
- US-A1- 2004 070 504
- US-A1- 2005 219 054

## Beschreibung

Die vorliegende Erfindung betrifft eine Haube gemäß dem Oberbegriff Anspruchs 1, insbesondere zum Verschließen von Lager- oder Transportbehältern für die Aufnahme von korrosionsempfindlicher Ladung.

Behälter für die Lagerung und/oder den Transport von korrosionsempfindlicher Ladung sind für verschiedene Einsatzbereiche bekannt. Im Rahmen der industriellen Fertigung, zum Beispiel in der Automobilindustrie, kommen solche Behälter in großer Stückzahl zum Einsatz, um eine rationelle und automatisierbare Lagerhaltung einer Vielzahl von verschiedenen Teilen zu ermöglichen. Solche auch als Kleinladungsträger (KLT) bezeichneten Behälter weisen in der Regel die Form eines Quaders auf, der an der Oberseite offen ist. Zum Verschließen derartiger Behälter eignen sich sowohl Hauben aus flexiblen Folien als auch steife Deckel.

Soweit es sich bei der Ladung der Behälter um metallische Erzeugnisse handelt, werden flüchtige Korrosionsinhibitoren (VCI, Volatile Corrosion Inhibitors) eingesetzt, um diese während der Lagerung oder des Transports gegen atmosphärische Korrosion zu schützen. Bei den VCI handelt es sich um chemische Substanzen, die bei Raumtemperatur sublimieren und sich auf der Oberfläche der zu schützenden Erzeugnisse niederschlagen, um dort ihre korrosionsinhibierende Wirkung zu entfalten.

Insbesondere bei umfangreichen Lagerhaltungen mit einer großen Zahl an verschiedenen Erzeugnissen und/oder Einzelteilen stellt es häufig ein Problem dar, den Inhalt verschiedener Behälter jederzeit eindeutig identifizieren zu können. Sowohl das Öffnen der Behälter, um deren Inhalt festzustellen, als auch das Vorsehen einer Beschriftung sind umständliche Maßnahmen, die jeweils nur manuell durchgeführt werden können. Darüber hinaus führt das wiederholte Öffnen von eingelagerten Behältern dazu, dass ein Teil des flüchtigen Korrosionsinhibitors aus dem Behälter entweicht und/oder Umgebungsluft in den Behälter eindringt, so dass der Korrosionsschutz beeinträchtigt wird.

In der US 2004/0070504 A1 wird ein RFID-fähiger Behälter beschrieben, der einen Behälterrohling umfasst und einen RF-Transponder, der auf dem Behälterrohling so angeordnet ist, dass er von außen nicht sichtbar ist, wenn der Container aufgestellt ist.

Aufgabe der vorliegenden Erfindung ist es, eine Haube bereitzustellen, mit deren/dessen Hilfe eine schnelle und einfache Identifikation der in dem Behälter befindlichen Ladung ermöglicht wird.

Diese Aufgabe wird bei einer Haube gemäß Anspruch 1 dadurch gelöst, dass die Haube ein elektronisches Speicherelement umfasst.

Besondere Ausgestaltungen und Vorteile der erfindungsgemäßen Haube, die sich im Hinblick auf den Einsatz eines flüchtigen Korrosionsinhibitors ergeben, werden weiter unter noch im Detail ausgeführt. Im Folgenden soll zunächst auf die Vorteile des elektronischen Speicherelements eingegangen werden.

Durch das Vorsehen eines solchen Speicherelements in oder an den Hauben, die zum Verschließen von Lager- oder Transportbehältern verwendet werden, wird eine sehr einfache, sichere und umfangreiche Identifikation der Ladung ermöglicht. Hauben mit einem elektronischen Speicherelement können darüber hinaus auch zur Verpackung von Stückgut, z.B. Motoren oder Getrieben, eingesetzt werden. Mit Hilfe des Speicherelements kann der Inhalt jederzeit identifiziert werden, ohne dass die Verpackung geöffnet und dadurch der Korrosionsschutz beeinträchtigt wird. Dadurch werden beispielsweise Inventur oder Zollabfertigung der Waren wesentlich erleichtert.

Das Speicherelement kann genutzt werden, um jegliche Art von relevanten Daten zu speichern, insbesondere Art und Menge des Inhalts des Behälters, genaue Typenbezeichnungen, das Datum der Einlagerung oder den Bestimmungsort beim Transport. Dabei kann das Speicherelement auch dazu dienen, den Transportweg der Ware zu verfolgen.

Ferner besteht die Möglichkeit, die Lebensdauer und/oder das Einsatzdatum eines flüchtigen Korrosionsinhibitors in dem Element zu speichern. Dies ist deshalb von Interesse, weil durch das kontinuierliche Ausdiffundieren des Korrosionsinhibitors eine Erschöpfung eintritt, so dass dieser nach einer bestimmten Zeit ersetzt werden muss, um einen gleichbleibenden Korrosionsschutz zu gewährleisten. Aus den gespeicherten Daten kann jeweils die restliche Lebensdauer des Korrosionsinhibitors ermittelt werden bzw. der Zeitpunkt, zu dem dieser ersetzt werden sollte.

Besonders relevant ist das Problem der Erneuerung des Korrosionsschutzes bei sehr langen Lagerzeiträume, die beispielsweise bis zu 15 Jahren betragen können. Dies ist insbesondere in der Automobilindustrie der Fall, da Ersatzzeile für ältere Fahrzeugmodelle auf Grund gesetzlicher Vorgaben z.T. über Jahre hinweg vorgehalten werden müssen. Hier ist es besonders wichtig, die eingelagerten Teile jederzeit eindeutig identifizieren zu können sowie über die gesamte Lagerzeit einen zuverlässigen Korrosionsschutz aufrecht zu erhalten. Das Vorsehen eines elektronischen Speicherelements gemäß der vorliegenden Erfindung bietet hier für beide Probleme eine einfache und umfassende Lösung.

Ein elektronisches Speicherelement ermöglicht es, eine große Menge von Daten auf sehr kleinem Raum, etwa im Vergleich zu einer Beschriftung, zu speichern. Zudem kann ein elektronischer Speicherchip maschinell ausgelesen und/oder beschrieben werden, so dass diese Vorgänge auch automatisiert durchgeführt werden können.

Das Speicherelement ist bevorzugt berührungslos auslesbar. Dies ist insbesondere mit Hilfe sogenannter RFID-Chips (Radio Frequency IDentification) der Fall, die über Funk ausgelesen werden können.

Weiterhin ist es bevorzugt, wenn das Speicherelement auch berührungslos beschreibbar ist, so dass die in dem Element gespeicherten Daten bei Bedarf auf einfache Weise aktualisiert werden können. Dies gilt insbesondere für die oben angesprochene Lebensdauer des Korrosionsschutzes, die durch wiederholtes Öffnen des Behälters beeinträchtigt wird und die dann bei jeder Öffnung entsprechend aktualisiert werden kann.

Das Speicherelement ist vorzugsweise unlösbar mit der Haube verbunden. Dadurch kann einem Datenverlust durch ein Entfernen oder Abfallen des Speicherelements vorgebeugt werden.

Vorteilhafterweise ist das Speicherelement auf die Haube aufgeschweißt. Ein Ablösen des Speicherelements ist dadurch praktisch ausgeschlossen. Im Falle der erfindungsgemäßen Haube kann das Speicherelement insbesondere auch in einer Schweißnaht der Haube eingeschweißt sein.

Ferner kann das Speicherelement auf die Haube aufgeklebt sein. Ein Aufkleben kann insbesondere dann günstig sein, wenn ein Aufschwei-βen auf Grund der Materialien des Speicherelements und der Haube nicht möglich ist.

Das elektronische Speicherelement umfasst bevorzugt einen elektronischen Speicherchip und einen Träger, auf dem der Speicherchip angeordnet ist. Dabei können der Speicherchip und/oder auch ein RFID-Chip in dem Träger eingeschlossen oder auf diesen aufgeklebt sein.

Der Träger selbst ist wiederum bevorzugt auf die Haube aufgeklebt oder aufgeschweißt. Im Falle einer Haube auf Basis von Polyethylen ist auch ein solcher Träger bevorzugt auf Basis von Polyethylen hergestellt.

Es kann im Rahmen der vorliegenden Erfindung auch vorgesehen sein, dass das elektronische Speicherelement an dem Behälter selbst angeordnet ist. Gegenstand der Erfindung ist daher auch ein Lager- oder Transportbehälter der eingangs genannten Art, der ein elektronisches Speicherelement umfasst. Dabei kann die Anordnung des Speicherelements an dem Behälter in derselben Weise und gemäß denselben Ausführungsformen erfolgen, wie dies im Zusammenhang mit der erfindungsgemäßen Haube beschrieben wurde.

Neben dem Einsatz von flüchtigen Korrosionsinhibitoren in loser Form oder in Trägermaterialien ist ebenfalls bekannt, die VCI in Kunststofffolien zu integrieren (siehe beispielsweise EP 1 281 790 B1). Solche Folien, die den Korrosionsinhibitor kontinuierlich durch Diffusion freisetzen, können in vielfältiger Weise für Verpackungszwecke eingesetzt werden.

Die vorliegende Erfindung betrifft eine Haube der eingangs genannten Art, die aus einer Folie hergestellt ist, welche mindestens einen flüchtigen Korrosionsinhibitor enthält.

Die erfindungsgemäße Haube, die einen Innenraum definiert und eine Öffnung aufweist, wird mit ihrer Öffnung über den Lager- oder Transportbehälter gestülpt. Der Behälter wird dadurch verschlossen, und gleichzeitig wird der in der Folie enthaltene Korrosionsinhibitor an den Innenraum des Behälters abgegeben. Dadurch wird auch während einer längeren Lagerzeit ein Korrosionsschutz der in dem Behälter enthaltenen Ladung sichergestellt.

Ist der in der Folie enthaltende Korrosionsinhibitor erschöpft, wird die Haube ausgetauscht. Durch die Speicherung des Einsatzdatums der Haube in dem elektronischen Speicherelement kann die restliche Lebensdauer des Korrosionsinhibitors, wie oben beschrieben, jederzeit festgestellt werden.

Um einen festen Sitz der Haube und ein ausreichendes Maß an Dichtigkeit zu gewährleisten, war es bei den bisher bekannten Hauben erforderlich, ein zusätzliches Verschlusselement, zum Beispiel ein Gummiband, entlang der Öffnung der Haube einzuarbeiten. Dies führt zu einem erhöhten Aufwand bei der Herstellung der Hauben, da das Einarbeiten nur manuell erfolgen kann, was angesichts der hohen benötigten Stückzahlen mit signifikanten Kostensteigerungen verbunden ist.

Dieses Problem wird durch eine weitere Ausführungsform der erfindungsgemäßen Haube gelöst, bei der die Haube aus einer Korrosionsinhibitor(en) enthaltenden Folie hergestellt ist, die elastisch dehnbar ist. Im Rahmen der vorliegenden Erfindung wird eine Folie als elastisch dehnbar bezeichnet, wenn nach einer Dehnung der Folie zumindest überwiegend eine Rückstellung auf die ursprüngliche Abmessung erfolgt.

Hauben aus einer elastisch dehnbaren Folie weisen gegenüber den bisher verwendeten VCI enthaltenden Hauben deutliche Vorteile auf. Insbesondere können mit einer solchen elastischen Haube Lager- oder Transportbehälter ohne das Vorsehen eines zusätzlichen Verschlusselements dicht verschlossen werden können. Die erfindungsgemäße elastische Haube besteht vorzugsweise lediglich aus der Folie und kann somit auf einfache Weise maschinell hergestellt werden. Dies führt zu einer deutlichen Kostenersparnis gegenüber den bisher bekannten Hauben.

Beim Verschließen von Behältern oder beim Verpacken von Stückgut zum Zweck der Lagerung oder des Transports wird die erfindungsgemäße elastische Haube in der Regel gedehnt, so dass sie auf Grund der hohen elastischen Rückstellkraft eng an dem verpackten Gegenstand anliegt. Dies vermindert einerseits die Gefahr, dass die Folie von dem Gegenstand absteht und beim Transport beschädigt wird, und gewährleistet andererseits eine hohe Dichtigkeit der Verpackung. Gerade unter dem Gesichtspunkt des Korrosionsschutzes ist es wünschenswert, dass die Verpackung möglichst luftdicht ist, was durch die Verwendung einer erfindungsgemäßen elastischen Haube in hohem Maße ermöglicht wird. Die Dehnung der Folie entlang der Öffnung der Haube beträgt dabei in der Regel bis zu 10% (sogenannte Gebrauchsdehnung).

Die Dichtigkeit der Haube gegenüber Luft und Wasserdampf kann zusätzlich dadurch erhöht werden, dass sich entlang der Öffnung der Haube durch Zusammenschieben der Folie eine Wulst bildet, die einen entsprechend stärkeren Druck auf den Behälter ausübt.

Die Dehnbarkeit der Folie, aus der die erfindungsgemäße elastische Haube hergestellt ist, kann unter anderem durch ihre Reißdehnung gekennzeichnet werden, das heißt durch ihre maximale Dehnung bis zum Riss. Bevorzugt beträgt die Reißdehnung der Folie 300% oder mehr, noch mehr bevorzugt 600% oder mehr.

Neben dieser gesamten Dehnbarkeit der Folie bis zum Riss ist vor allem der Bereich der elastischen Dehnung von Bedeutung, innerhalb dessen tatsächlich eine Rückstellung auf die ursprüngliche Abmessung der Folie erfolgt. Dieser Bereich wird auch als Rückstelldehnung bezeichnet und liegt bevorzugt bei 50% oder mehr, weiter bevorzugt bei 100% oder mehr.

Die Folie zeichnet sich ferner dadurch aus, dass ihre Elastizität bzw. Rückstellfähigkeit in elastisch gedehntem Zustand über einen längeren Zeitraum, typischerweise mindestens 8 bis 10 Wochen, erhalten bleibt.

Die Dicke der Folie liegt je nach Einsatzgebiet der erfindungsgemäßen elastischen Haube bevorzugt im Bereich von 40 bis 150 µm, insbesondere im Bereich von 50 bis 80 µm.

Die besonderen Eigenschaften der elastisch dehnbaren Folie bieten ferner den Vorteil, dass die daraus hergestellte Haube eine hohe Durchstoßfestigkeit senkrecht zur Materialebene aufweist. Die erfindungsgemäße elastische Haube bietet damit einen guten Schutz gegen äußere mechanische Einwirkungen auf den verpackten Gegenstand.

Bevorzugt handelt es sich bei der elastisch dehnbaren Folie um eine Kunststofffolie, die auf Basis eines synthetischen Polymers hergestellt ist. Als Ausgangsmaterial können dabei verschiedene Polymere in Betracht kommen, mit denen die oben beschriebenen mechanischen Eigenschaften realisierbar sind. Vorzugsweise ist die Folie auf Basis von Polyethylen oder Polyethylencopolymeren hergestellt. Diese Polymere sind zur Herstellung von Folien, insbesondere mittels des Extrusionsverfahrens, sehr gut geeignet.

Besonders geeignete Ausgangsmaterialien für die Folie sind Linear-low-density-Polyethylen (LLD-PE), Very-low-density-Polyethylen (VLD-PE) oder entsprechende Copolymere. Diese Polymere führen auf Grund ihrer Molekülstruktur zu Folien mit einer hohen elastischen Dehnfähigkeit. Bei den verwendeten Polyethylenen kann es sich darüber hinaus um Metallocen-Polyethylen (mPE) oder entsprechende Copolymere handeln.

Bei einer bevorzugten Ausführungsform der Erfindung umfasst die Folie zwei oder mehr Lagen. Vorzugsweise ist in diesem Fall der mindestens eine flüchtige Korrosionsinhibitor zumindest in derjenigen Lage der Folie enthalten, die dem Innenraum der Haube zugewandt ist, so dass der Korrosionsinhibitor ausschließlich oder überwiegend in Richtung des Behälterinhaltes bzw. des verpackten Stückgutes abgegeben wird und nicht an die Umgebung.

Die Verwendung mehrlagiger Folien ist auch deshalb besonders vorteilhaft, weil durch eine oder mehrere zusätzliche Lagen, die keinen Korrosionsinhibitor enthalten, die erfindungsgemäße elastische Dehnfähigkeit sowie die hohe Reißfestigkeit der Folie weiter verbessert werden können. Diese Eigenschaften ergeben sich in erster Linie aus der Molekularstruktur der Folie, welche durch den Zusatz des Korrosionsinhibitors in der entsprechenden Lage beeinflusst wird. Lagen ohne Korrosionsinhibitor tragen insbesondere auch zu einer hohen Luftdichtigkeit und Wasserdampfdichtigkeit der Folie bei.

Die Lagen einer zwei- oder mehrlagigen elastisch dehnbaren Folie sind bevorzugt coextrudiert. Die Coextrusion mehrlagiger Folien kann mittels verschiedener Extrusionsverfahren, insbesondere mittels Blasfolienextrusion, realisiert werden.

Es hat sich gezeigt, dass die Vorteile der vorliegenden Erfindung besonders gut mit einer Haube aus einer dreilagigen, coextrudierten Folie erzielt werden können, wobei der mindestens eine Korrosionsinhibitor in einer der äußeren Lagen der Folie enthalten ist.

Der mindestens eine flüchtige Korrosionsinhibitor ist bevorzugt in feinpulvriger Form in der Folie enthalten. Dies kann insbesondere dadurch erreicht werden, dass der mindestens eine flüchtige Korrosionsinhibitor vor einer Extrusion der Folie in mit Polymeren gebundener Form (compoundiert) der Polymerschmelze zugegeben wird. Durch diesen sogenannten Masterbatch wird eine möglichst feine und gleichmäßige Verteilung des mindestens einen Korrosionsinhibitors in der Folie gewährleistet.

Als flüchtige Korrosionsinhibitoren wären eine Vielzahl von chemischen Verbindungen denkbar. Vorteilhafterweise ist der mindestens eine flüchtige Korrosionsinhibitor ausgewählt aus Nitraten, Nitriten, Phosphaten, Silikaten, Boraten, Chromaten, Molybdaten, Aminen, Benzoaten, heterocyclischen Verbindungen und Mischungen hiervon. Bevorzugt kommen jeweils die Natriumsalze der genannten Verbindungen zum Einsatz.

Die Folie, aus der die erfindungsgemäße Haube hergestellt ist, ist vorteilhafterweise transluzent eingefärbt. Eine derartige Einfärbung kann zur Kennzeichnung von verpackten Gegenständen dienen, ohne dass auf eine Transparenz der Haube verzichtet werden muss.

Die erfindungsgemäße Haube kann aus einem oder mehreren Folienstücken hergestellt sein, wobei das/die Folienstück(e) gefaltet und/oder übereinandergelegt ist/sind und deckungsgleiche Ränder des/der Folienstücke(s) zum Teil miteinander verschweißt sind. Dabei bilden die nicht verschweißten Ränder des/der Folienstücke(s) die Öffnung, mit der die Haube über den Behälter gezogen werden kann.

Wie bereits angesprochen wurde, bieten die beim Verschweißen gebildeten Nähte eine bevorzugte Möglichkeit, das elektronische Speicherelement mit der Haube zu verbinden, indem das Speicherelement in eine Schweißnaht der Haube eingeschweißt wird.

Um ein unerwünschtes Überstehen der Haube zu vermeiden, ist es bevorzugt, wenn deren Gestalt an die Form des Lager- oder Transportbehälters angepasst ist. Für derartige Behälter sind prinzipiell verschiedene Formen denkbar, zum Beispiel eine Quaderform oder eine Zylinderform.

In den allermeisten Fällen kommen quaderförmige Behälter zum Einsatz, insbesondere die eingangs erwähnten Kleinladungsträger. Es ist daher bevorzugt, dass auch die Haube eine quaderförmige Gestalt aufweist. Dies kann insbesondere dadurch erreicht werden, dass die Folie an der der Öffnung gegenüberliegenden Seite der Haube in Richtung des Innenraums eingefaltet ist.

Bei einer bevorzugten Ausführungsform ist die Haube aus einem Folienschlauch hergestellt, wobei die Folie zur Herstellung der Haube entlang zweier gegenüberliegender Bereiche entlang der Längsachse des Schlauches in Richtung des Innenraums des Schlauches eingefaltet wird, und wobei der Folienschlauch an einem Ende so verschweißt wird, dass die eingefalteten Bereiche der Folie mit den nicht eingefalteten Bereichen der Folie vierlagig verschweißt sind. Hauben dieser Art sind besonders einfach herzustellen, indem ein mittels Blasfolienextrusion erzeugter, kontinuierlicher Folienschlauch wie oben beschrieben eingefaltet wird und dann in vorgegebenen Abständen geschnitten und entlang der Schnittkante verschweißt wird. Dabei können sämtliche Arbeitsschritte kontinuierlich und automatisiert durchgeführt werden.

Die derart hergestellte Haube kann in eine quaderförmigen Gestalt gebracht werden, wobei die zuvor eingefalteten Bereiche der Folie zwei gegenüberliegende Seiten der Haube bilden. Die Schweißnaht verläuft dann entlang einer Mittellinie der der Öffnung gegenüberliegenden Seite der Haube, wobei die der Schweißnaht benachbarten Abschnitte der zuvor eingefalteten Bereiche so in Richtung des Innenraums der Haube eingefaltet werden, dass zwei dreieckige Bereiche, in denen die Folie dreifach aufeinander zu liegen kommt, gebildet werden.

Eine ähnliche Haube kann, alternativ zur Verwendung eines Schlauches, auch aus zwei gleich großen rechteckigen Folienstücken hergestellt sein, die entlang jeweils dreier ihrer Ränder miteinander verschweißt sind unter Ausbildung einer mittleren Schweißnaht und zweier daran anschließender seitlicher Schweißnähte; wobei die Haube zwei mittlere Faltlinien aufweist, die jeweils in einem identischen Abstand zu beiden Seiten parallel der mittleren Schweißnaht verlaufen, zwei seitliche Faltlinien aufweist, die jeweils mit demselben identischen Abstand zu beiden Seiten parallel der seitlichen Schweißnähte verlaufen, und vier diagonale Faltlinien aufweist, die von den vier Schnittpunkten der mittleren Faltlinien mit den seitlichen Faltlinien bis zu dem jeweils benachbarten Ende der mittleren Schweißnaht verlaufen; wobei die Folie entlang der diagonalen Faltlinien und entlang derjenigen Abschnitte der seitlichen Faltlinien, die zwischen den Schnittpunkten mit den mittleren Faltlinien liegen, um 180° gefaltet ist, so dass jeweils zwei dreieckige Folienbereiche deckungsgleich aufeinander zu liegen kommen; und wobei die Folie entlang der mittleren Faltlinien und entlang derjenigen Abschnitte der seitlichen Faltlinien, die außerhalb der Schnittpunkte mit den mittleren Faltlinien liegen, um 90° gefaltet ist, so dass die Haube eine quaderförmige Gestalt aufweist.

Die vorliegende Erfindung betrifft auch die Verwendung einer Haube, wie vorstehend beschrieben, zum Verschließen von Lager- oder Transportbehältern.

Lager- oder Transportbehälter für korrosionsempfindliche Ladung, wie sie eingangs beschrieben wurden, können an Stelle einer Haube auch mit einem Deckel verschlossen werden. Unter einem Deckel wird insbesondere ein im Wesentlichen steifes Element verstanden, mit dem der Behälter lösbar verschlossen werden kann.

Diese und weitere Vorteile der Erfindung werden anhand der nachfolgenden Ausführungsbeispiele und unter Bezugnahme auf die Figuren näher erläutert. Es zeigen im Einzelnen:
- Figur 1 :: eine perspektivische Darstellung eines ersten Ausführungsbeispiels einer erfindungsgemäßen Haube und eines hiermit verschlossenen Behälters;
- Figur 2:: eine schematische Darstellung betreffend die Herstellung der in Figur 1 gezeigten Haube aus einer Folie;
- Figur 3:: eine weitere Darstellung der Haube gemäß Figur 1;
- Figur 4:: eine schematische Darstellung betreffend die Herstellung eines zweiten Ausführungsbeispiels einer erfindungsgemäßen Haube;
- Figur 5:: eine perspektivische Darstellung des zweiten Ausführungsbeispiels einer erfindungsgemäßen Haube;
- Figur 6:: eine Schnittdarstellung zweier aufeinander gestapelter Behälter, die mit erfindungsgemäßen Hauben verschlossen sind;
- Figur 7:: eine perspektivische Darstellung eines dritten Ausführungsbeispiels einer erfindungsgemäßen Haube;
- Figur 8:: eine perspektivische Darstellung eines Behälters mit einem Deckel;
- Figur 9:: eine Schnittdarstellung eines Behälters mit einem ersten Ausführungsbeispiel eines Deckels;
- Figur 10:: eine Schnittdarstellung eines zweiten Ausführungsbeispiels eines Deckels;
- Figur 11:: eine Schnittdarstellung eines dritten Ausführungsbeispiels eines Deckels;
- Figur 12:: eine Schnittdarstellung eines vierten Ausführungsbeispiels eines Deckels;
- Figur 13:: eine perspektivische Darstellung eines Behälters mit einem fünften Ausführungsbeispiel eines Deckels; und
- Figur 14:: eine schematische Darstellung eines Teils des Deckels gemäß Figur 13.

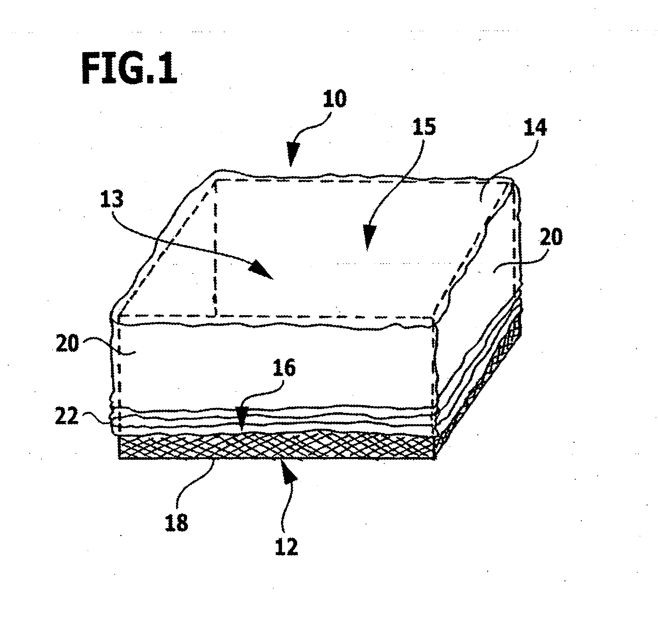

Ein erstes Ausführungsbeispiel einer erfindungsgemäßen Haube ist in der Figur 1 perspektivisch dargestellt und dort mit 10 bezeichnet. Ferner zeigt die Figur 1 einen Lager- oder Transportbehälter 12, der einen Aufnahmeraum 13 definiert und eine Öffnung 14 aufweist, welche durch die Haube 10 verschlossen ist. Die Teile des Behälters 12, die von der Haube 10 bedeckt sind, sind dabei aus Gründen der Übersichtlichkeit mit gestrichelten Linien dargestellt. Die Haube 10 ist bevorzugt transparent.

Sowohl der Behälter 12 als auch die Haube 10 weisen eine im Wesentlichen quaderförmige Gestalt auf. Bei dem Behälter 12 kann es sich beispielsweise um einen Kleinladungsträger (KLT), wie er im Rahmen der industriellen Lagerhaltung vielfach zum Einsatz kommt, handeln.

Die Haube 10 ist aus einer Folie hergestellt, welche mindestens einen flüchtigen Korrosionsinhibitor umfasst und elastisch dehnbar ist. Beispielsweise kann diese Folie aus einem Linear-low-density-Polyethylen (LLD-PE) hergestellt sein. Die Folie weist eine hohe elastische Dehnfähigkeit und Rückstellkraft auf.

Typischerweise handelt es sich bei der Folie um eine dreilagige, coextrudierte Folie mit einer Reißdehnung im Bereich von 650 bis 750% und einer elastischen Dehnung im Bereich von 50 bis 100%. Dabei ist der mindestens eine Korrosionsinhibitor lediglich in derjenigen Lage der Folie enthalten, die dem Innenraum 15 der Haube 10 zugewandt ist. Bei dem Korrosionsinhibitor kann es sich um die weiter oben genannten Verbindungen oder Mischungen hiervon handeln, wie beispielsweise Natriumbenzoat, Natriumnitrit oder Triethanolamin-Phosphat.

Der Umfang der Haube 10 entlang ihrer Öffnung 16, in ungedehntem Zustand der Folie, ist kleiner als der Umfang des Behälters 12 in einer Ebene parallel zu seiner Bodenfläche 18. Daher liegt die Haube 10 an den Seitenwänden 20 des Behälters 12 auf Grund der elastischen Rückstellkraft der Folie fest an. Weiterhin ist die Höhe der Haube 10, d.h. deren Abmessung senkrecht zur Bodenfläche 18, größer gewählt als die Höhe der Seitenwände 20, so dass die Folie entlang der Öffnung 16 der Haube 10 durch Raffung eine Wulst 22 bildet. Diese sorgt zusätzlich für einen luftdichten Verschluss des Behälters 12.

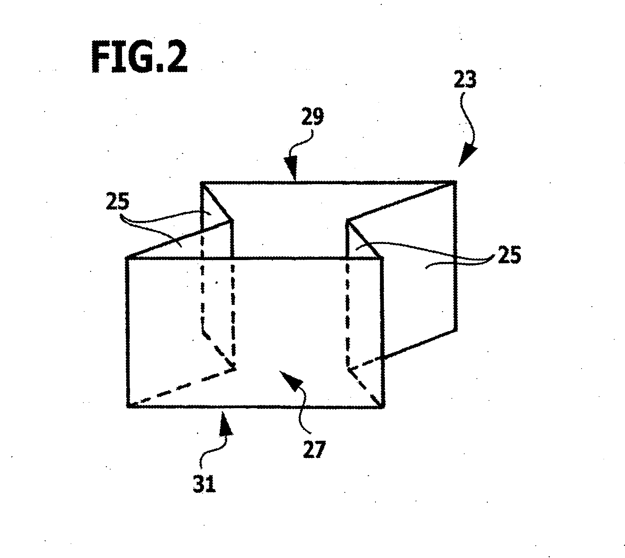

Die Haube 10 kann aus einem Folienschlauch 23 hergestellt werden, der in der Figur 2 schematisch dargestellt ist. Ein solcher Folienschlauch 23 kann insbesondere mittels Blasfolienextrusion erzeugt werden.

Dabei wird die Folie zunächst entlang zweier gegenüberliegender Bereiche 25 entlang der Längsachse des Schlauches 23 in Richtung des Innenraums 27 des Schlauches 23 eingefaltet. Anschließend wird der Folienschlauch 23 an einem Ende 29 so verschweißt, dass die eingefaltenen Bereiche 25 der Folie mit den nicht eingefalteten Bereichen der Folie vierlagig verschweißt sind (in der Figur 2 nicht dargestellt). Das gegenüberliegende, nicht verschweißte Ende 31 des Schlauches 23 bildet die Öffnung 16 der Haube 10.

Das Extrudieren eines kontinuierlichen Folienschlauches, das Ablängen einzelner Folienschläuche 23 sowie das Verschweißen an deren Enden 29 können kontinuierlich und automatisiert durchgeführt werden.

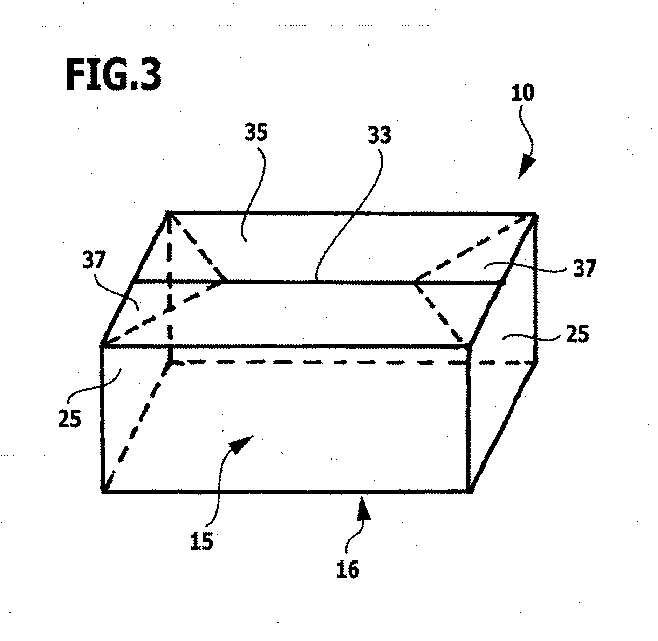

Der auf diese Weise verschweißte Folienschlauch 23 kann in die im Wesentlichen quaderförmigen Gestalt der Haube 10 gebracht werden, wie dies in der Figur 3 gezeigt ist. Dabei bilden die zuvor eingefalteten Bereiche 25 der Folie zwei gegenüberliegende Seiten 25 der Haube 10. Die durch Verschweißen des Endes 29 des Schlauches 23 gebildete Schweißnaht 33 verläuft entlang einer Mittellinie der der Öffnung 14 gegenüberliegenden Seite 35 der Haube 10, wobei die der Schweißnaht 33 benachbarten Abschnitte der zuvor eingefalteten Bereiche 25 so in Richtung des Innenraums 15 der Haube eingefaltet werden, dass zwei dreieckige Bereiche 37, in denen die Folie dreifach aufeinander zu liegen kommt, gebildet werden.

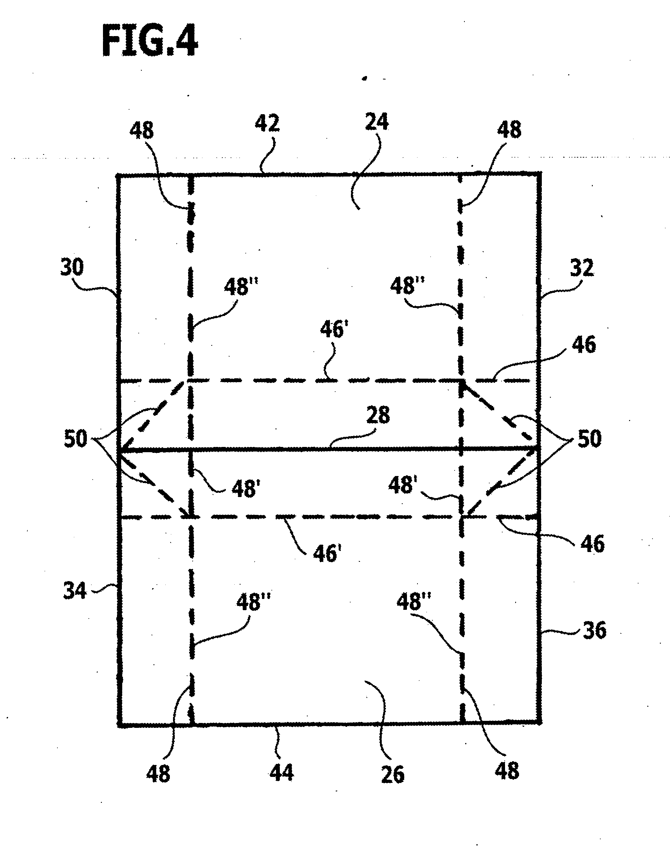

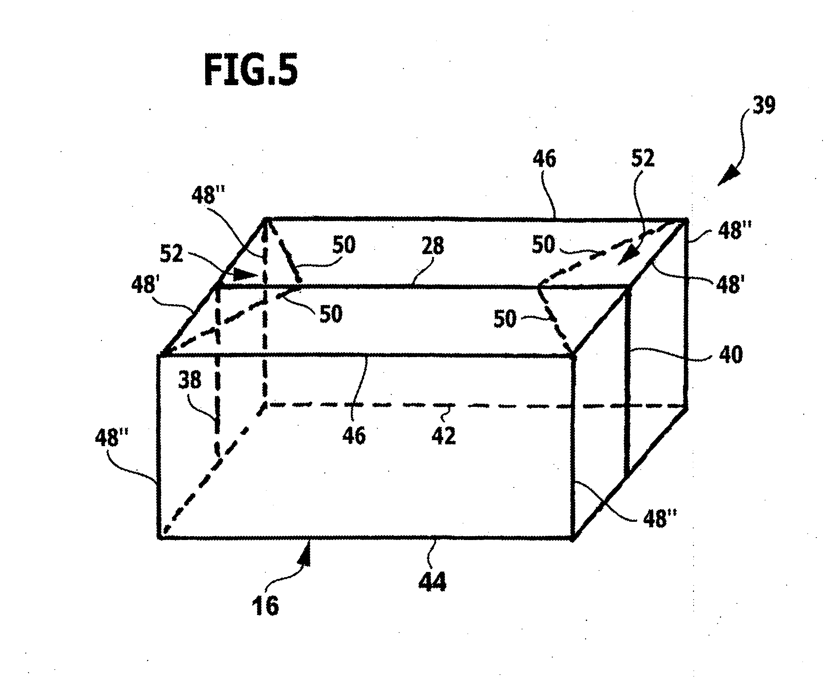

Ein zweites Ausführungsbeispiel einer erfindungsgemäßen Haube mit einer im Wesentlichen quaderförmigen Gestalt kann auch durch Verschweißen und Falten von zwei rechteckigen Folienstücken hergestellt werden, wie dies im Folgenden unter Bezugnahme auf die Figuren 4 und 5 beschrieben wird.

Die Figur 5 zeigt eine perspektivische Darstellung des zweiten Ausführungsbeispiels der Haube, die als Ganzes mit 39 bezeichnet ist, einschließlich der Schweißnähte und eingefalteten Bereiche der Folie.

Die zur Herstellung der Haube 39 verwendeten Folienstücke 24 und 26 sind in der Figur 4 in ausgebreiteter Form dargestellt. Die beiden gleich großen, rechteckigen Stücke sind zunächst entlang einer mittleren Schweißnaht 28 an jeweils einem ihrer Ränder miteinander verschweißt. Zur Herstellung der Haube 39 werden ferner auch die der mittleren Schweißnaht 28 benachbarten Ränder 30 und 32 des ersten Folienstücks 24 mit den entsprechenden Rändern 34 bzw. 36 des zweiten Folienstücks 26 verschweißt, unter Ausbildung der in Figur 3 gezeigten seitlichen Schweißnähte 38 bzw. 40. Die der mittleren Schweißnaht 28 gegenüberliegenden Ränder 42 bzw. 44 bilden dabei die Öffnung 16 der Haube 39.

Die Folienstücke 24 und 26 werden zur Herstellung der Haube 39 entlang folgender Faltlinien gefaltet (in Figur 4 durch gestrichelte Linien dargestellt), wobei sich der Verlauf der Faltlinien auf die in einer Ebene ausgebreiteten Folienstücke 24 und 26 bezieht: zwei mittlere Faltlinien 46 verlaufen jeweils in identischem Abstand zu beiden Seiten parallel der mittleren Schweißnaht 28, zwei seitliche Faltlinien 48 verlaufen jeweils in demselben identischen Abstand zu beiden Seiten parallel der seitlichen Schweißnähte 38 und 40, und vier diagonale Faltlinien 50 verlaufen jeweils von den vier Schnittpunkten der mittleren Faltlinien 46 mit den seitlichen Faltlinien 48 bis zu dem jeweils benachbarten Ende der mittleren Schweißnaht 28.

Entlang der diagonalen Faltlinien 50 sowie entlang derjenigen Abschnitte 48' der seitlichen Faltlinien 48, die zwischen den Schnittpunkten mit den mittleren Faltlinien 46 liegen, wird die Folie um 180° gefaltet, so dass jeweils zwei dreieckige Folienbereiche 52 deckungsgleich aufeinander zu liegen kommen.

Entlang der mittleren Faltlinien 46 sowie entlang derjenigen Abschnitte 48" der seitlichen Faltlinien 48, die außerhalb der Schnittpunkte mit den mittleren Faltlinien 46 liegen, wird die Folie um 90° gefaltet, so dass die Haube 39 die in Figur 5 gezeigte quaderförmige Gestalt aufweist.

Dabei bilden die Abschnitte 48" die vier senkrecht zur Öffnung 16 verlaufenden Kanten der Haube 39, und die Abschnitte 48' bilden zwei zueinander parallele, der Öffnung 16 gegenüberliegende Kanten der Haube 39. Zwei weitere parallele Kanten, die der Öffnung 16 gegenüberliegen und die senkrecht zu den Abschnitten 48' verlaufen, werden durch diejenigen Abschnitte 46' der mittleren Faltlinien 46 gebildet, die zwischen den Schnittpunkten mit den seitlichen Faltlinien 48 liegen.

Alternativ zur Verwendung von zwei Folienstücken 24 und 26 ist es auch möglich, ein einziges, doppelt so großes Folienstück zu verwenden. In diesem Fall entfällt die Schweißnaht 28.

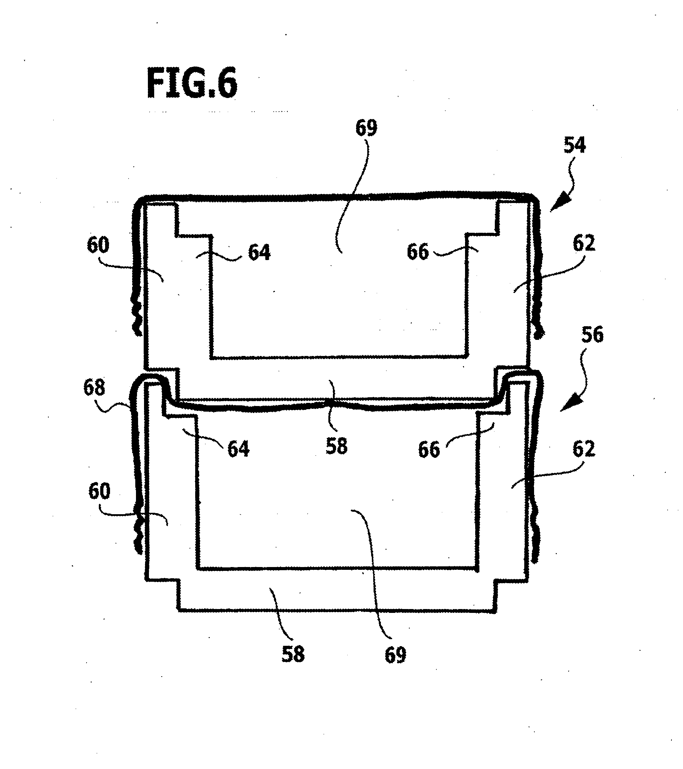

Auf Grund der hohen Dehnfähigkeit und Reißfestigkeit der elastischen Folie ist es möglich, mehrere verschlossene Behälter aufeinander zu stapeln, ohne dass ein Beschädigung der Haube zu befürchten ist. Dies ist in der Figur 6 illustriert. Lager- und Transportbehälter werden häufig übereinander gestapelt, wobei sie so ausgebildet sind, dass ein seitliches Verrutschen der Behälter verhindert wird. Figur 6 zeigt schematisch zwei übereinander gestapelte Behälter 54 und 56 im seitlichen Querschnitt. Das Verrutschen des oberen Behälters 54 wird dadurch verhindert, dass ein Vorsprung 58 an der Unterseite des Behälters 54 zwischen die Seitenwände 60 und 62 des unteren Behälters 56 eingreift und dabei auf Vorsprüngen 64 und 66 aufliegt.

Alternativ zu der hier gezeigten Ausführungsform der Behälter 54 und 56 sind weitere Gestaltungen möglich, um durch einen Formschluss zwischen den Behältern eine Querverschiebung zu verhindern.

Der untere Behälter 56 ist hier mit einer Haube 68 verschlossen, die der Haube 10 des ersten Ausführungsbeispiels entspricht. Die Haube 68 wird dabei durch den Vorsprung 58 des Behälters 54 teilweise in Richtung auf den Aufnahmeraum 69 des Behälters 56 eingedrückt, was auf Grund der elastischen Dehnfähigkeit der für die Haube 68 verwendeten Folie problemlos möglich ist, ohne dass die Gefahr besteht, dass die Folie einreißt. Derselbe Vorteil ergibt sich auch bei anderen Gestaltungen des Formschlusses zwischen den Behältern, da dies stets mit Dehnung der Folie verbunden sein wird.

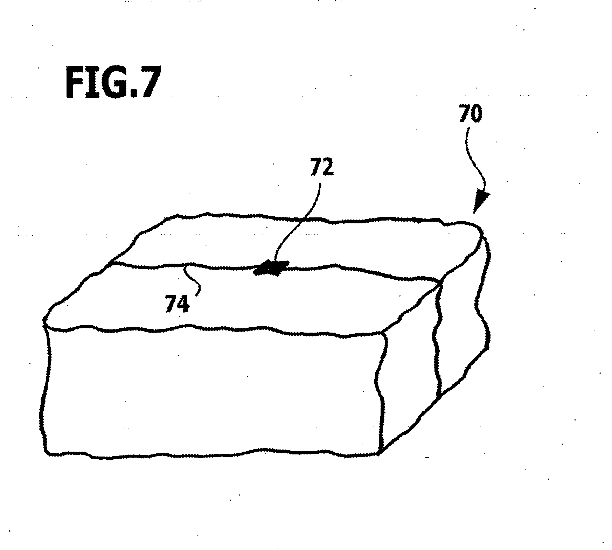

Ein drittes Ausführungsbeispiel einer erfindungsgemäßen Haube ist in der Figur 7 perspektivisch dargestellt und dort als Ganzes mit 70 bezeichnet. Die Haube 70 ist aus einer Folie hergestellt, die mindestens einen flüchtigen Korrosionsinhibitor enthält, wie bei der Haube 10 des ersten Ausführungsbeispiels.

Die Haube 70 umfasst ein elektronisches Speicherelement 72, das in eine Schweißnaht 74 der Haube 70 eingeschweißt ist. In dem Speicherelement 72 können verschiedene Daten gespeichert werden, die im Hinblick auf einen mit der Haube 70 verschlossenen Behälter relevant sind, insbesondere Art und Menge des Inhalts des Behälters, das Datum der Einlagerung usw.

Das Speicherelement 72 kann beispielsweise einen RFID-Chip umfassen, der berührungslos über Funk ausgelesen und beschrieben werden kann. Auf diese Weise können verschiedene Behälter jederzeit eindeutig identifiziert und die relevanten Daten bei Bedarf aktualisiert werden.

Alternativ zum Einschweißen in die Folie kann das elektronische Speicherelement 72 auch auf andere Weise mit der Folie verbunden sein. Zum Beispiel kann ein Speicherchip direkt auf die Folie aufgeklebt werden oder durch Einschweißen oder Kleben in oder an einem Träger befestigt sein. Ein solcher Träger kann wiederum auf die Folie aufgeklebt oder aufgeschweißt werden, wobei die Folie und der Träger bevorzugt aus dem gleichen Material, insbesondere Polyethylen, bestehen.

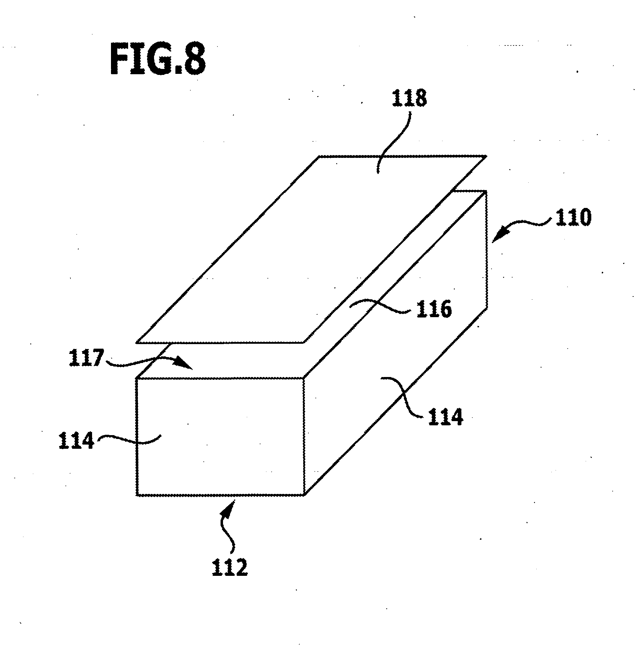

In der Figur 8 ist ein Behälter, der zur Lagerung und zum Transport von Kleinladung eingesetzt werden kann, schematisch dargestellt und als Ganzes mit 110 bezeichnet. Der Behälter 110, der bevorzugt aus Kunststoff hergestellt ist, weist eine quaderförmige Gestalt auf und umfasst eine rechteckige Bodenfläche 112 und vier sich von der Bodenfläche 112 senkrecht nach oben erstreckende, rechteckige, jeweils paarweise parallele Seitenwände 114. Der Behälter 10 definiert einen Innenraum 116 und weist eine Öffnung 117 auf, welche durch die oberen Ränder der Seitenwände 114 gebildet wird.

Ein zum Verschließen der Öffnung 117 des Behälters 110 geeigneter Deckel 118 ist in der Figur 8 in einer leicht über dem Behälter 110 angehobenen Position gezeigt. Der Deckel 118 ist im Wesentlichen rechteckig und besteht vorzugsweise aus einem Kunststoffmaterial, wie auch der Behälter 110.

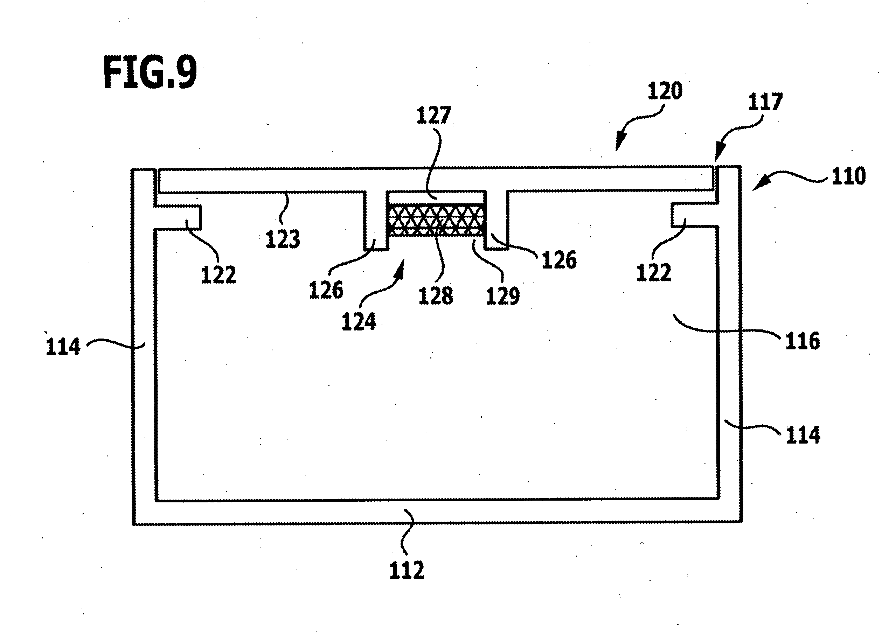

Eine Haltevorrichtung und/oder ein Aufnahmeraum, die an dem Deckel 118 angeordnet sind, sind auf Grund der gewählten Perspektive in der Figur 8 nicht sichtbar. Mögliche Ausgestaltungen des Deckels 118 ergeben sich aus den vier Ausführungsbeispielen, die in den Figuren 9 bis 12 dargestellt sind und die im Folgenden beschrieben werden. Dabei zeigen die Figuren jeweils einen Deckel und gegebenenfalls einen Behälter in einer Schnittdarstellung, wobei die Schnittebene einer Symmetrieebene des Behälters 110 entspricht.

Eine entsprechende Schnittdarstellung des Behälters 110, dessen Öffnung 117 mit einem ersten Ausführungsbeispiel eines Deckels 120 verschlossen ist, ist In der Figur 9 gezeigt. Der Deckel 120 liegt auf leistenförmigen Vorsprüngen 122 auf, die mindestens an zwei gegenüberliegenden Seitenwänden 114 angeformt sind und die parallel zu den die Öffnung 117 bildenden Rändern der Seitenwände 114 verlaufen. Die Vorsprünge 122 sind dabei in einem ungefähr der Dicke des Deckels 120 entsprechenden Abstand zu der Öffnung 117 angeordnet, so dass der Deckel in etwa bündig mit den Seitenwänden 114 abschließt und den Innenraum 116 des Behälters 110 nach oben begrenzt.

An der dem Innenraum 116 des Deckels 120 zugewandten Seite, das heißt der Innenseite 123, ist eine Haltevorrichtung 124 angeordnet. Diese Haltevorrichtung 124 umfasst zwei Klemmelemente 126 in Form von quader- oder leistenförmigen Vorsprüngen, die zueinander beabstandet angeordnet sind und die in einem rechten Winkel von der Innenseite 123 des Deckels 120 abstehen. Die Klemmelemente 126 definieren einen zwischen ihnen liegenden Aufnahmeraum 127, wobei eine Fluidverbindung 129 zwischen diesem Aufnahmeraum 127 und dem Innenraum 116 des Behälters 110 durch die unverschlossene, von der Innenseite 123 weg weisende Seite des Aufnahmeraums 127 definiert wird.

In dem Aufnahmeraum 127 ist ein Trägerelement 128, das mindestens einen flüchtigen Korrosionsinhibitor enthält, angeordnet. Bei diesem Trägerelement 128 handelt es sich bei dem gezeigten Ausführungsbeispiel um einen Schaumstoff, der so dimensioniert ist, dass er kraftschlüssig, das heißt unter Spannung, zwischen den zwei Klemmelementen 126 gehalten wird. Der in dem Schaumstoff enthaltene Korrosionsinhibitor kann durch die Porenstruktur des Schaumstoffs aus diesem herausdiffundieren, durch die Fluidverbindung 129 weiter in den Innenraum 116 des Behälters 110 diffundieren und sich dort gleichmäßig verteilen.

Alternativ kann anstelle eines Schaumstoffs auch ein anderes Trägerelement zum Einsatz kommen, beispielsweise eine Tablette, ein Pellet oder dergleichen, mit darin enthaltenem Korrosionsinhibitor. Dabei sind die Größe der Tablette und der Abstand zwischen den Klemmelementen 126 jeweils so gewählt, dass die Tablette unter Spannung in den Aufnahmeraum 127 eingeführt und kraftschlüssig zwischen den Klemmelementen 126 gehalten wird. Auch in diesem Fall kann der Korrosionsinhibitor aus dem in Halteposition befindlichen Trägerelement 128, dass heißt der Tablette, ausdiffundieren und über die Fluidverbindung 129 in den Innenraum 116 des Behälters 110 gelangen.

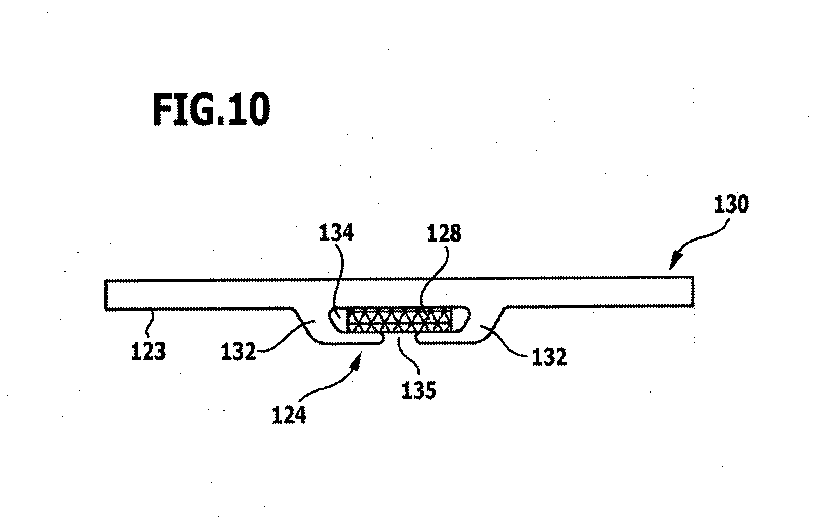

Bei einem zweiten Ausführungsbeispiel eines Deckels, der in der Figur 10 mit 130 bezeichnet ist, umfasst die Haltevorrichtung 124 ebenfalls zwei Klemmelemente 132. Die Klemmelemente 132 sind voneinander beabstandet an der Innenseite 123 des Deckels 130 angeordnet und weisen eine näherungsweise L-förmige Gestalt auf. Erste Teilbereiche der Klemmelemente 132 erstrecken sich in etwa rechtwinklig von der Innenseite 123 des Deckels 130 weg. Sich daran anschließende zweite Teilbereiche der Klemmelemente 132 erstrecken sich parallel zum Deckel, wobei freie Enden der zweiten Teilbereiche der beiden Klemmelemente 132 aufeinander zu orientiert sind.

Die Klemmelemente 132 definieren einen zwischen ihnen und der Innenseite 123 des Deckels 130 liegenden Aufnahmeraum 134, der eine Fluidverbindung 135 in Form eines Austrittsspalts zum Innenraum eines in der Figur nicht gezeigten Behälters aufweist.

Ein Trägerelement 128, das zwischen die beiden Klemmelemente 132 eingesetzt ist, wird auf diese Weise in dem Aufnahm eraum 134 zwischen dem Deckel 130 und den Klemmelementen 132 gehalten. Ein oder mehrere in dem Trägerelement 128 enthaltende Korrosionsinhibitoren können über die Fluidverbindung 135 in den Innenraum des Behälters diffundieren.

Die Klemmelemente 132 sind, wie auch die Klemmelemente 126 des ersten Ausführungsbeispiels, bevorzugt einstückig mit dem Deckel 130 ausgebildet.

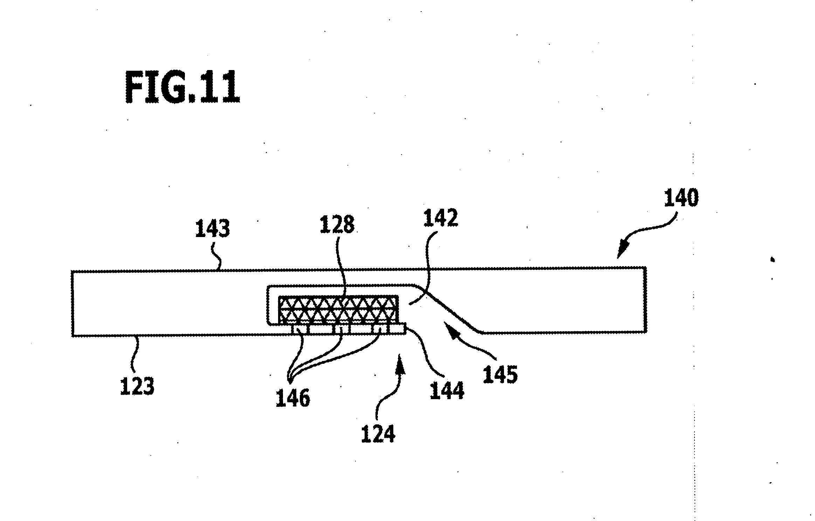

Ein drittes Ausführungsbeispiel eines Deckels ist in der Figur 11 im Querschnitt dargestellt und dort mit 140 bezeichnet. Der Deckel 140 ist im Wesentlichen massiv ausgebildet, weist jedoch eine in etwa quaderförmige Ausnehmung auf, welche einen Aufnahmeraum 142 für ein Trägerelement 128 definiert. Während der Aufnahmeraum 142 zur Außenseite 143 des Deckels hin vollständig geschlossen ist, wird er zur Innenseite 123 hin durch ein Auflageelement 144 begrenzt, welches einstückig mit dem Deckel 140 ausgebildet ist.

Das Auflageelement 144 bildet eine in etwa rechteckige Fläche, verläuft parallel zur Innenseite 123 des Deckels 140 und schließt mit dieser bündig ab. Entlang mindestens einem seiner vier Ränder ist das Auflageelement 144 nicht mit dem Deckel 140 verbunden, sondern von diesem beabstandet, so dass eine Befüllungsöffnung 145 des Aufnahmeraums 142 gebildet wird. Durch die Befüllungsöffnung 145 kann das Trägerelement 128 zwischen das Auflageelement 144 und den Deckel 140, dass heißt in den Aufnahmeraum 142, eingeschoben werden kann. Das Auflageelement 144 dient dabei als Haltevorrichtung 124.

Um eine möglichst ungehinderte Diffusion des mindestens einen flüchtigen Korrosionsinhibitors aus dem Trägerelement 128 in den Innenraum 116 des Behälters 110 zuzulassen, weist das Auflageelement 144 Durchbrüche 146 auf. Die Durchbrüche 146 bilden, neben der Befüllungsöffnung 145, die Fluidverbindung zwischen dem Aufnahmeraum 142 und dem Innenraum 116 des Behälters 110. Dabei kann es sich um wenige Durchbrüche 146 handeln, wie in der Figur 11 dargestellt, oder um eine Vielzahl von Durchbrüchen. Besonders vorteilhaft ist es, wenn das Auflageelement 144 in Form eines Gitters ausgebildet ist.

Bei dem Trägerelement 128 kann es sich auch im Rahmen dieses Ausführungsbeispiels um zum Beispiel einen Schaumstoff, eine Tablette oder ein Pellet handeln. Ebenso kann das Trägerelement 128 aber zum Beispiel auch eine Kunststoffumhüllung umfassen, durch die ein darin enthaltener Korrosionsinhibitor hindurchdiffundieren kann.

Durch die Bildung des Aufnahmeraums 142 in einer Ausnehmung des Deckels 140 weist der Deckel 140 eine insgesamt im Wesentlichen planare Gestalt auf, wodurch eine gute Stapelbarkeit mehrerer gleichartiger Deckel 140 begünstigt wird. Beim Aufeinanderstapeln mehrerer Deckel 140 mit eingesetztem Trägerelement 128 ist letzteres im Wesentlichen gasdicht umschlossen, da die Durchbrüche 146 und die Befüllungsöffnung 145 durch die Außenseite 143 des darunterliegenden Deckels 140 verschlossen werden. Dadurch wird ein Ausdiffundieren des Korrosionsinhibitors während der Lagerung der Deckel 140 weitgehend verhindert.

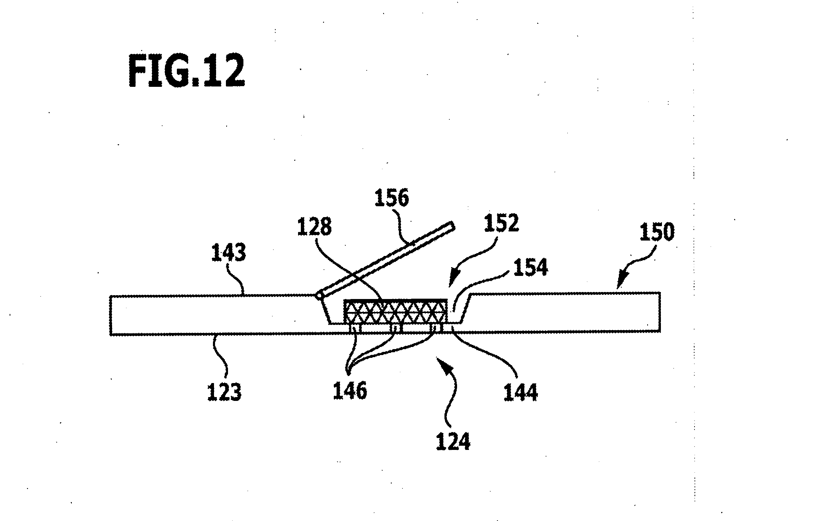

Ein viertes Ausführungsbeispiel eines Deckels ist in der Figur 12 im Querschnitt dargestellt und dort mit 150 bezeichnet ist. Bei dem Deckel 150 ist ebenfalls ein Aufnahmeraum 154 vorgesehen, der durch eine im Wesentlichen quaderförmige Ausnehmung in dem ansonsten massiven Deckel 150 gebildet Ist.

Ein als Haltevorrichtung 124 dienendes Auflageelement 144, gebildet durch einen dünneren Wandabschnitt, grenzt den Aufnahmeraum 154 zum Innenraum des Behälters hin ab. Das im Wesentlichen rechteckige Auflageelement 144 ist einstückig mit dem Deckel 150 ausgebildet und im Gegensatz zum dritten Ausführungsbeispiel entlang aller vier Ränder mit dem Deckel 150 verbunden. Eine Fluidverbindung zwischen dem Aufnahmeraum 154 und dem Innenraum des Behälters wird daher lediglich durch die in dem Auflageelement 154 vorgesehenen Durchbrüche 146 gebildet. Dabei kann das Auflageelement 154 auch in diesem Fall in Form eines Gitter ausgebildet sein.

Zur Außenseite 143 des Deckels 150 hin weist der Aufnahmeraum 154 eine Befüllungsöffnung 152 auf, die im Wesentlichen rechteckig ist und die dem Auflageelement 144 gegenüberliegt. Durch die Befüllungsöffnung 152 kann ein Trägerelement 128, welches den Aufnahmeraum 154 im Wesentlichen ausfüllt, bequem in diesen eingeführt werden.

Die Befüllungsöffnung 152 ist durch ein Verschlusselement 156 in Form einer schwenkbaren Klappe, die an der Außenseite 143 des Deckels 150 angelenkt ist, verschließbar. In Verschlussstellung der Klappe wird ein Ausdiffundieren des Korrosionsinhibitors nach außen verhindert.

Der Deckel 150 gemäß diesem Ausführungsbeispiel bietet den Vorteil, dass ein Trägerelement 128 mit erschöpftem Korrosionsinhibitor durch die Befüllungsöffnung 152 ausgetauscht werden kann, ohne dass dabei der Behälter geöffnet werden muss.

Bei den vorstehend beschriebenen Ausführungsbeispielen ist der Deckel ein steifes Verschlusselement, das aus einem im Wesentlichen unflexiblen Kunststoffmaterial hergestellt ist. Dessen ungeachtet kann auch bei einer erfindungsgemäßen Haube, die ganz oder teilweise aus einer flexiblen Folie hergestellt ist, an der dem Innenraum des Behälters zugewandten Seite der Haube ein Aufnahmeraum und/oder eine Haltevorrichtung, wie oben beschrieben, vorgesehen sein.

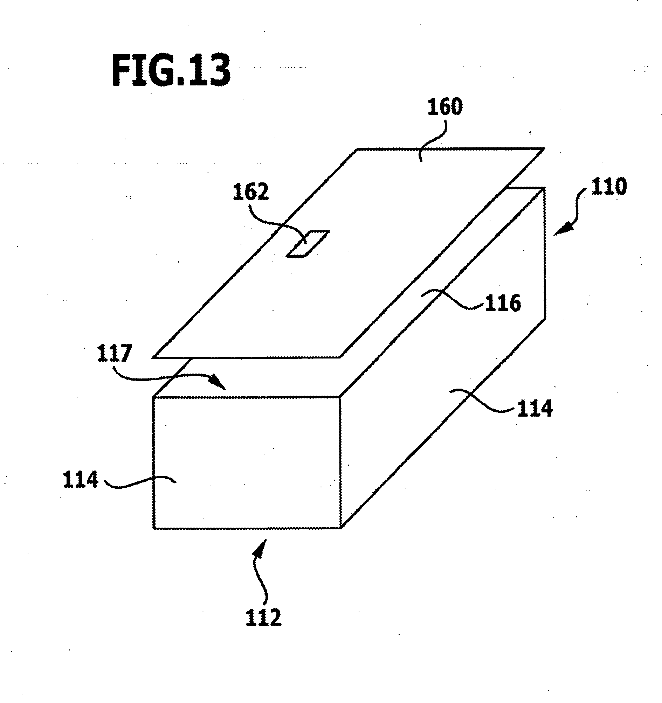

Die Figur 13 zeigt eine perspektivische Darstellung des bereits in Figur 8 gezeigten Behälters 110 mit einem fünften Ausführungsbeispiel eines Deckels, welcher in einer leicht über dem Behälter 110 angehobenen Position dargestellt und mit 160 bezeichnet ist. Der Deckel 160 kann gegebenenfalls eine Haltevorrichtung und/oder einen Aufnahmeraum wie bei den Deckeln 120, 130, 140 oder 150 umfassen.

Der Deckel 160 umfasst ein elektronisches Speicherelement 162, welches auf der Außenseite des Deckels 160 aufgeklebt oder aufgeschweißt ist. In dem Speicherelement 162 können verschiedene Daten gespeichert werden, die im Hinblick auf den Behälter 110 relevant sind, beispielsweise Art und Menge der Ladung und/oder das Datum der Einlagerung. Insbesondere kann in dem Speicherelement 162 auch das Einsatzdatum eines Korrosionslnhibitors gespeichert werden, der sich in einem Trägerelement an dem Deckel 160 befindet oder der in sonstiger Form in dem Behälter 110 vorhanden ist.

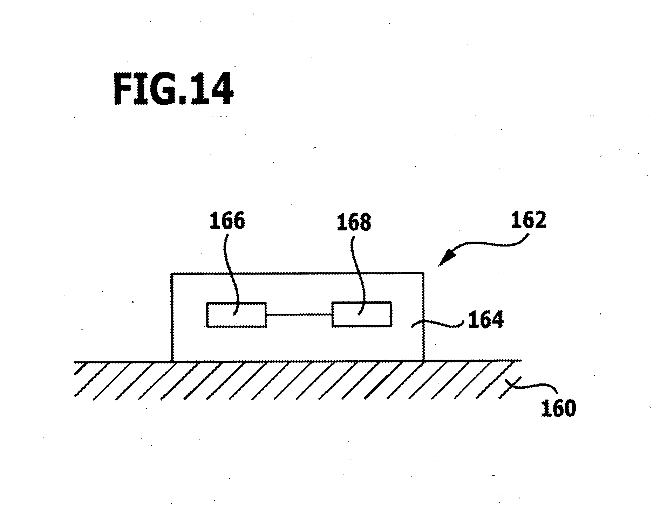

Eine Detailansicht des Speicherelements 162 ist schematisch in der Figur 14 dargestellt. Das Speicherelement 162 umfasst einen Träger 164, in den ein elektronischer Speicherchip 166 eingeschweißt ist. Der Träger 164 besteht bevorzugt aus Kunststoff, insbesondere aus demselben Kunststoffmaterial wie der Deckel 160, wodurch die Möglichkeit besteht, ihn auf den Deckel 160 aufzuschweißen. Ebenso ist eine Klebeverbindung zwischen dem Speicherchip 166 und dem Träger 164 sowie zwischen dem Träger 164 und dem Deckel 160 möglich.

Das Speicherelement 162 kann ferner einen RFID-Chip 168 umfassen, der ein berührungsloses Auslesen der gespeicherten Daten über Funk ermöglicht. Der Speicherchip 166 und der RFID-Chip 168 können auch als eine Einheit ausgebildet sein. Durch die Verwendung von RFID-Chips können verschiedene Behälter besonders schnell und einfach identifiziert und die relevanten Daten bei Bedarf aktualisiert werden.

In entsprechender Weise, wie dies vorstehend für den Deckel 160 beschrieben ist, kann das elektronische Speicherelement auch an dem Behälter 110 vorgesehen sein, zum Beispiel an einer der Seitenwände 114 oder an der Bodenfläche 112.

## Patentansprüche

1. Haube (10; 39; 70), die einen Innenraum (15) definiert und eine Öffnung (16) aufweist, insbesondere zum Verschließen von Lager- oder Transportbehältern (12) für die Aufnahme von korrosionsempfindlicher Ladung, wobei die Haube (10; 39; 70) ein elektronisches Speicherelement (72) umfasst, **dadurch gekennzeichnet, dass** die Haube (10; 39; 70) aus einer Folie hergestellt ist, welche mindestens einen flüchtigen Korrosionsinhibitor enthält.

2. Haube (10; 39; 70) nach Anspruch 1, **dadurch gekennzeichnet, dass** das Speicherelement (72) unlösbar mit der Haube (10; 39; 70) verbunden ist.

3. Haube (10; 39; 70) nach Anspruch 1 oder 2, **dadurch gekennzeichnet, dass** in dem Speicherelement (72) die Lebensdauer und/oder das Einsatzdatum des flüchtigen Korrosionsinhibitors gespeichert sind.

4. Haube (10; 39; 70) nach einem der voranstehenden Ansprüche, **dadurch gekennzeichnet, dass** die Folie elastisch dehnbar ist.

5. Haube (10; 39; 70) nach einem der voranstehenden Ansprüche, **dadurch gekennzeichnet, dass** die Folie eine Dicke von 40 bis 150 µm aufweist.

6. Haube (10; 39; 70) nach einem der voranstehenden Ansprüche, **dadurch gekennzeichnet, dass** die Folie auf Basis von Polyethylen oder Polyethylencopolymeren hergestellt ist.

7. Haube (10; 39; 70) nach einem der voranstehenden Ansprüche, **dadurch gekennzeichnet, dass** die Haube (10; 39; 70) aus einer zwei- oder mehrlagigen Folie hergestellt ist, wobei der mindestens eine flüchtige Korrosionsinhibitor zumindest in derjenigen Lage der Folie enthalten ist, die dem Innenraum (15) zugewandt ist.

8. Haube (10; 39; 70) nach einem der voranstehenden Ansprüche, **dadurch gekennzeichnet, dass** der mindestens eine flüchtige Korrosionsinhibitor in feinpulvriger Form in der Folie enthalten ist.

9. Haube (10; 39; 70) nach einem der voranstehenden Ansprüche, **dadurch gekennzeichnet, dass** der mindestens eine flüchtige Korrosionsinhibitor ausgewählt ist aus Nitraten, Nitriten, Phosphaten, Silikaten, Boraten, Chromaten, Molybdaten, Aminen, Benzoaten, heterocyclischen Verbindungen und Mischungen hiervon.

10. Verwendung einer Haube (10; 39; 70) nach einem der voranstehenden Ansprüche zum Verschließen von Lager- oder Transportbehältern (12).

11. Verwendung einer Haube (10; 39; 70) nach einem der Ansprüche 1 bis 9 zum Verpacken von Stückgut.

## Claims

1. Hood (10; 39; 70), which defines an internal space (15) and has an opening (16), in particular for closing storage or transport containers (12) for receiving a corrosion-sensitive load, wherein the hood (10; 39; 70) comprises an electronic memory element (72), **characterized in that** the hood (10; 39; 70) is produced from a sheet which contains at least one volatile corrosion inhibitor.

2. Hood (10; 39; 70) according to claim 1, **characterized in that** the memory element (72) is non-detachably connected to the hood (10; 39; 70).

3. Hood (10; 39; 70) according to claim 1 or 2, **characterised in that** the working life and/or the deployment date of the volatile corrosion inhibitor is stored in the memory element (72).

4. Hood (10; 39; 70) according to any one of the preceding claims, **characterised in that** the sheet is elastically extensible.

5. Hood (10; 39; 70) according to any one of the preceding claims, **characterised in that** the sheet has a thickness of 40 to 150 µm.

6. Hood (10; 39; 70) according to any one of the preceding claims, **characterised in that** the sheet is produced on the basis of polyethylene or polyethylene copolymers.

7. Hood (10; 39; 70) according to any one of the preceding claims, **characterised in that** the hood (10; 39; 70) is produced from a two- or multilayered sheet, wherein the at least one volatile corrosion inhibitor is contained at least in the layer of the sheet facing the internal space.

8. Hood (10; 39; 70) according to any one of the preceding claims, **characterised in that** the at least one volatile corrosion inhibitor is contained in the sheet in the form of fine powder.

9. Hood (10; 39; 70) according to any one of the preceding claims, **characterized in that** the at least one volatile corrosion inhibitor is selected from nitrates, nitrates, phosphates, silicates, borates, chromates, molybdates, amines, benzoates, heterocyclic compounds and mixtures thereof.

10. Use of a hood (10; 39; 70) according to any one of the preceding claims for closing storage or transport containers (12).

11. Use of a hood (10; 39; 70) according to any one of claims 1 to 9 for packing piece loads.

## Revendications

1. Couvercle (10 ; 39 ; 70) définissant un espace intérieur (15) et présentant une ouverture (16), prévu en particulier pour la fermeture de conteneurs de stockage ou de transport (12) destinés à recevoir une charge sensible à la corrosion, ledit couvercle (10 ; 39 ; 70) comprenant un élément de mémoire (72) électronique, **caractérisé en ce que** ledit couvercle (10 ; 39 ; 70) est fabriqué dans une feuille comprenant au moins un inhibiteur de corrosion volatil.

2. Couvercle (10 ; 39 ; 70) selon la revendication 1, **caractérisé en ce que** l'élément de mémoire (72) est raccordé de manière inamovible au couvercle (10 ; 39 ; 70).

3. Couvercle (10 ; 39 ; 70) selon la revendication 1 ou 2, **caractérisé en ce que** la durée de vie et/ou la date d'utilisation de l'inhibiteur de corrosion volatil sont sauvegardés dans l'élément de mémoire (72).

4. Couvercle (10 ; 39 ; 70) selon l'une des revendications précédentes, **caractérisé en ce que** la feuille est élastiquement extensible.

5. Couvercle (10 ; 39 ; 70) selon l'une des revendications précédentes, **caractérisé en ce que** la feuille présente une épaisseur de 40 à 150 µm.

6. Couvercle (10 ; 39 ; 70) selon l'une des revendications précédentes, **caractérisé en ce que** la feuille est fabriquée à base de polyéthylène ou de copolymères de polyéthylène.

7. Couvercle (10 ; 39 ; 70) selon l'une des revendications précédentes, **caractérisé en ce que** ledit couvercle (10 ; 39 ; 70) est fabriqué dans une feuille de deux ou de plusieurs couches, le ou les inhibiteurs de corrosion volatils étant contenus au moins dans la couche de la feuille qui fait face à l'espace intérieur (15).

8. Couvercle (10 ; 39 ; 70) selon l'une des revendications précédentes, **caractérisé en ce que** le ou les inhibiteurs de corrosion volatils sont contenus sous forme de poudre fine dans la feuille.

9. Couvercle (10 ; 39 ; 70) selon l'une des revendications précédentes, **caractérisé en ce que** le ou les inhibiteurs de corrosion volatils sont sélectionnés entre des nitrates, nitrures, phosphates, silicates, borates, chromates, molybdates, amines, benzoates, composés hétérocycliques, et des mélanges de ceux-ci.

10. Utilisation d'un couvercle (10 ; 39 ; 70) selon l'une des revendications précédentes pour la fermeture de conteneurs de stockage ou de transport (12).

11. Utilisation d'un couvercle (10 ; 39 ; 70) selon l'une des revendications 1 à 9 pour l'emballage de marchandises de détail.
